# EUROPÄISCHE PATENTSCHRIFT

(11) **EP 2 743 292 B1**
(45) Veröffentlichungstag und Bekanntmachung des Hinweises auf die Patenterteilung: **01.10.2014**
(21) Anmeldenummer: 12196896.0
(22) Anmeldetag: 13.12.2012
(51) Int. Cl.: C08J 5/04

(54) **Verfahren zur Herstellung eines dreidimensionalen Formkörpers und Halbzeug**
Method for producing a three-dimensional molded body, and semi-finished product
Procédé de fabrication d'un corps de formage tridimensionnel et semi-produit

(43) Veröffentlichungstag der Anmeldung: 18.06.2014
(73) Patentinhaber: HOMATHERM GmbH, 06536 Berga (DE)
(72) Erfinder: Müller, Michael Dr., 01257 Dresden (DE)
(74) Vertreter: Stenger, Watzke & Ring

(56) Entgegenhaltungen:
- WO-A1-2009/008822
- DE-A1- 3 343 330
- DE-A1-102006 018 286
- DE-A1-102009 056 581

## Beschreibung

Die Erfindung betrifft ein Halbzeug zur Herstellung dreidimensionaler Formkörper, enthaltend lignocellulose Fasern und thermoplastische Fasern. Die Erfindung betrifft zudem ein Verfahren zur Herstellung eines dreidimensionalen Formkörpers aus einem Halbzeug enthaltend lignocellulose Fasern und thermoplastische Fasern.

Die Erfindung bezieht sich prinzipiell auf die Gattung von Compositwerkstoffen aus natürlich gewachsenen lignocellulosen Fasern wie insbesondere Holzfasern und Zellstoff-Fasern sowie sich thermoplastisch verhaltenden, so genannten Thermobonding-Fasern in diesem Composit.

Diese Gattung ist eine Untergruppe der polymeren Faserverbundwerkstoffe, auch als Cellulose/Polymer- Verbundwerkstoffe, engl. CPC (cellulosic polymer compound) bezeichnet.

Dabei wird einerseits unterschieden in Werkstoffe mit überwiegendem Anteil an lignocellulosen Faser, den so genannten thermoplastisch gebundenen Holzfaserwerkstoffen", andererseits in Thermoplastwerkstoffe mit einer mengenmäßig geringen bis mittleren Einlagerung von lignocellulosen Fasern in den Thermoplast, den so genannten "faserverstärkten Kunststoffen".

Typische Vertreter für die Variante der Holzfaserwerkstoffe sind Formteile für Automobil-Seitenverkleidungen, flexible Holzfaser- Dämm- Matten und auch MDF- bzw. HDF- Platten (mitteldichte und hochdichte Holzfaserplatten)

Die faserverstärkten Kunststoffe werden (sofern mit lignocellulosen Fasern hinsichtlich der Lastaufnahme im Composit verbessert) zumeist als Faserformteile oder als WPC (wood plastic composite) bezeichnet. Bei dieser Werkstoffgattung wird der thermoplastische Anteil vor oder während der Formgebung vollständig aufgeschmolzen und anschließend durch Abkühlung in der entsprechenden Form erhärtet.

Bekannte und praktizierte formgebende Verfahren wie Extrusion, Pultrusion, Spritzgießen, Melt-Injektion, unterschiedliche Pressverformung zu dünnwandigen Endprodukten und viele weitere sind in der Literatur umfänglich beschrieben.

Ein gattungsgemäßes Verfahren läuft in zwei Schritten ab. In einem ersten Schritt werden aus schüttfähigen Ausgangsstoffen, nämlich lignocellulosen Fasern und thermoplastischen Fasern, Verbundkörper hergestellt. Diese werden als Halbzeuge, "prepregs" oder Vorformlinge bezeichnet. Die prepregs sind lagerfähig. In einem zweiten Schritt werden die prepregs erwärmt und umgeformt, so dass ein dreidimensionaler Formkörper entsteht.

Als thermoplastische Fasern (auch als Thermobondingfasern bezeichnet) kommen bislang Bi-Komponentenfasem zum Einsatz. Diese bestehen aus zwei hinsichtlich ihrer Eigenschaften unterschiedlichen Bestandteilen, nämlich einem Kern einerseits und einem Mantel andererseits. Für die Faserdämmstoffherstellung mit temperaturempfindlichen lignocellulosen Fasern übliche Bi-Komponentenfasern schmelzen im Mantel oberhalb 130°C. Eine wenig gebräuchliche, aber prinzipiell bekannte Bi-Komponentenfaser weist eine thermoplastische Mantelkomponente auf, die bereits bei einer Temperatur von unterhalb 100°C zu schmelzen beginnt, die Kernkomponente ist bis ca. 250°C temperaturstabil.

Durch ein Schmelzen des Mantels der Bi-Komponentenfasem bei der Herstellung des prepregs kann in vernachlässigbar geringem Umfang eine Art Verklebung mit den lignocellulosen Fasern erreicht werden, insbesondere verkleben jedoch die Bi-Komponentenfasern untereinander. Sie werden somit als "thermoplastische Stützfasern" für die lignocellulosen Fasern im Dämmstoff bezeichnet. Der nicht geschmolzene Kern sorgt für den Zusammenhalt und die Flexibilität der Dämm-Matte aus mehrheitlich lignocellulosen Fasern.

Eine spezielle Ausführungsform, von durch Thermobonding gebundener Faserstoffe erinnern an dünne Trittschallschutz- Matten. Die Bestimmung ist jedoch nicht die Übernahme einer Dämmfunktion, sondern die Eignung für ein nachträgliches Verpressen dünnwandiger harter Körper daraus. Aus derartigen sogenannten prepregs werden anschließend durch dreidimensionales Umformen Formkörper hergestellt. Um hierbei eine weitere Verdichtung dauerhaft zu erreichen, muss der umgeformte und verdichtete Formkörper seine aufgezwungene Raumform beibehalten. Aus dem Stand der Technik ist es daher bekannt, zusätzlich zu den thermoplastischen Fasern und den lignocellulosen Fasern Bindekomponenten zu verwenden, deren Schmelztemperatur unter 250°C liegt und welche nach dem Umformen und Nachverdichten der prepregs festigkeitsgebend wirken. Die hierdurch erreichte Faserbindung des Formkörpers ist üblicherweise duroplastisch, so dass der Formkörper nach der Verfahrensdurchführung irreversibel geformt bleibt.

Die Verwendung derartiger zusätzlicher Bindekomponenten hat eine gattungsgemäße Verfahrensdurchführung bereits verbessert. Es hat sich jedoch gezeigt, dass das Erreichen der erforderlichen Schmelztemperaturen innerhalb des prepregs immer noch sehr lange dauert und auch immer noch mit einer teilweisen thermischen Zersetzung der lignocellulosen Fasern einhergeht. Es dauert nämlich sehr lange, bis Temperaturen oberhalb 100°C bis in die Mitte des durch Einlagerung lignocelluloser Fasern stark gegen Kontaktwärmeeintrag dämmenden prepregs vordringen.

Zusätzliche Schwierigkeiten ergeben sich, wenn dickwandige Formkörper hergestellt werden sollen. Es sind dann entsprechend dicke prepregs erforderlich. Bei dem bekannten Kontaktwärmeeintrag von außerhalb dauert es aber mit steigender Dicke umso länger, bis die gewünschte Temperatur auch im Inneren des prepregs erreicht ist. Oftmals fangen die äußeren thermoplastischen Fasern eines prepregs bereits an, sich thermisch zu zersetzen, bevor im Inneren des prepregs die erforderliche Temperatur erreicht ist.

Ausgehend von diesem Stand der Technik ist es die **Aufgabe** der vorliegenden Erfindung, ein gattungsgemäßes Verfahren und ein gattungsgemäßes Halbzeug dahingehend zu verbessern, dass dreidimensionale Formkörper mit einer Dicke von vorzugsweise mehr als 10 mm mit verringertem Aufwand und einer verringerten Menge an thermisch zersetzten lignocellulosen Fasern herstellbar sind.

Verfahrensseitig wird die Aufgabe dadurch **gelöst,** dass das Halbzeug in einem ersten Schritt zum Zwecke der Erwärmung mit einer Frequenz zwischen 1 kHz und 300 GHz bestrahlt wird und diese Strahlung von den im Halbzeug enthaltenen thermoplastischen Fasern absorbiert wird, und dass das Halbzeug anschließend in einem zweiten Schritt dreidimensional umgeformt wird.

Vorrichtungsseitig wird die Aufgabe dadurch **gelöst**, dass die thermoplastischen Fasern Strahlung mit einer Frequenz zwischen 1 kHz und 300 GHz absorbierend ausgebildet sind.

Erfindungsgemäß wird das Halbzeug bestrahlt. Bei dieser Strahlung handelt es sich um elektromagnetische Wellen, insbesondere Hochfrequenzstrahlung und/oder Mikrowellenstrahlung. Die Frequenz dieser Strahlung beträgt zwischen 1 kHz und 300 GHz, insbesondere 3 MHz bis 300 GHz, besonders bevorzugt 0,9 GHz bis 300 GHz. Die Verwendung von Hochfrequenz- bzw. Mikrowellenstrahlung zur Erwärmung von Stoffen ist an sich bekannt. Hierbei wird die elektromagnetische Strahlungsenergie durch bekannte physikalische Prozesse in Wärmeenergie gewandelt. Die Bestrahlung von aus dem Stand der Technik bekannten Halbzeugen mit Hochfrequenz- bzw. Mikrowellen ist nicht sinnvoll zur Erwärmung derselben geeignet, da die bekannten thermoplastischen Fasern für derartige Strahlung transparent sind. Bei den aus dem Stand der Technik bekannten Halbzeugen wird die Strahlung daher nur von eventuell in den lignocellulosen Fasern enthaltenem Restwasser absorbiert. Auf diese Weise werden die vorstehend genannten Probleme jedoch nicht gelöst, da der Wärmeeintrag primär in den lignocellulosen Fasern erfolgt.

Erfindungsgemäß kommen bei einem gattungsgemäßen Halbzeug erstmalig thermoplastische Fasern zum Einsatz, welche die beschriebene Strahlung absorbieren. Die thermoplastischen Fasern erwärmen sich direkt. Es kommt hingegen nicht zu einer indirekten Erwärmung durch in das Halbzeug eingebrachte Zusatzstoffe. Es handelt sich um ein und dieselbe thermoplastische Faser, welche die Strahlung absorbiert und gleichzeitig der Verbindung der lignocellulosen Fasern beim Vorgang des Nachverdichtens und Pressens dient. Auf diese Weise können gezielt die thermoplastischen Fasern bis zum Erreichen der Schmelztemperatur erwärmt werden, ohne dass sich die lignocellulosen Fasern erwärmen und somit thermisch zersetzen. Die thermoplastischen Fasern werden so lange bestrahlt, bis die Schmelztemperatur erreicht ist. Anschließend kann das Halbzeug dann umgeformt werden, wobei die wieder erstarrenden thermoplastischen Fasern einen Erhalt der Raumform des umgeformten und verdichteten Halbzeugs bewirken.

Erfindungsgemäß können somit dreidimensionale Formkörper hergestellt werden, wobei die erforderliche Wärme gezielt in den Formkörper eingebracht werden kann. Dies reduziert die insgesamt benötigte Wärmemenge im Vergleich zum Stand der Technik. Hinzu kommt, dass das gezielte Erwärmen der thermoplastischen Fasern ein thermisches Zersetzen der lignocellulosen Fasern weitestgehend verhindert. Zudem ist von Vorteil, dass sich statt der üblichen Formteile mit Wandstärken von deutlich unterhalb 10 mm nunmehr problemlos auch Wandstärken ab 10 mm Dicke und deutlich darüber hinaus erzielbar sind.

Ein Halbzeug, welches die thermoplastischen Fasern gemäß der Erfindung enthält, kann gänzlich ohne Verwendung zusätzlicher Bindemittel hergestellt und weiterverarbeitet werden. Auf die aus dem Stand der Technik bekannten duroplastischen oder flüssig auf die Fasern applizierten, sich thermoplastisch verhaltenden Bindemittel (z.B. Acrodur^{®}) kann verzichtet werden. Selbstverständlich ist es möglich, zusätzlich zu den thermoplastischen Fasern gemäß der Erfindung weitere Bindemittel in das Halbzeug einzuarbeiten, was die festigkeitsgebende Wirkung verstärken kann und einen Beitrag zur Verklebung der lignocellulosen Fasern leisten kann.

Vorzugsweise wird anstelle einer Bi-Komponentenfaser eine Monokomponentenfaser verwendet. Die Monokomponentenfaser ist homogen aus einem einzigen Material ausgebildet. Die Monokomponentenfaser weist eine gleitende Schmelztemperatur auf. Dies bedeutet, dass die Zustände einer vollständig festen und einer vollständig geschmolzenen Faser in einem engen Temperaturbereich liegen, das heißt Temperaturunterschiede von nur 10°C, insbesondere 8°C, bevorzugt 5°C erforderlich sind. Die Schmelztemperaturen einer bekannten Bi-Komponentenfaser weisen herstellungsbedingt zumindest 30°C oder deutlich mehr Unterschied auf.

Überraschend hat sich unter Verwendung der Monokomponentenfasern gezeigt, dass man bereits ohne Zugabe bekannter Bi- Komponentenfasern, nur durch Zumischung dieser Monokomponentenfaser zu den lignocellulosen Naturfasern unkompliziert die gewünschten Halbzeuge herstellen kann.

Die Monokomponentenfaser kann vom Hersteller dieser Faser derart ausgebildet sein, dass sie bereits unterhalb von 100°C einen handhabbaren Verbund mit den lignocellulosen Fasern ergibt. Ohne darüber hinaus gehenden Eintrag von Hitze, die nicht von den Bindefasern absorbiert wird, können eventuelle duroplastische Zusätze vor irreversibler Schädigung geschützt werden.

Das Halbzeug kann somit einer räumlich und zeitlich getrennten weiteren Umformung zur Verfügung gestellten werden. Damit ist eine breite Variabilität der Endprodukte, je nach beim Weiterverarbeiter dieser Halbzeuge vorhandener Anlagentechnik, gegeben.

Die erforderliche, im Kern des Formkörpers für eine Aushärtung zu erreichende Temperatur, richtet sich dabei nach dem ggf. beigefügten duroplastisch härtenden Zusatz. Ist ein solcher Zusatz nicht vorhanden, hat sich überraschend gezeigt, dass für das vollständige und mit Hydroxylgruppen der Lignocellulosefasern feste Bindungen ergebende Schmelzen der Monokomponentenfaser eine Temperatur von 130 - 135°C ausreichend ist.

Somit wird eine Festigkeit des Formkörpers erzielt, die mit aus dem Stand der Technik bekannten Materialien, insbesondere Polyolefinen wie z.B. Polypropylen und Polyethylen, und Polyesterfasern nicht möglich ist.

Zur Erwärmung der thermoplastischen Fasern können neben der erfindungsgemäßen Verwendung von Mikrowellen- bzw. Hochfrequenzstrahlung auch die klassischen Methoden wie Kontaktwärme und/oder Heißluftdurchströmung, verwendet werden.

Bekannte Bi-Komponentenfaser sind ebenso strahlungstransparent wie alle klassischen für flexible Holzfaserdämm- Matten eingesetzten Polyolefin und Polyesterfasern. Auch bekannte Bi-Komponentenfasern für Holzfaserdämmstoffe auf Basis von PLA (poly lactid acid = Polymilchsäure) sind transparent für solche hochfrequenten Wechselfelder und Mikrowellen.

Bevor es bei sehr lang andauernder Bestrahlung letztendlich doch zu einem Schmelzprozess dieser herkömmlichen Bi-Komponentenfaser kommt, beginnt die nicht zu stoppende thermische Zersetzung der benachbarten Holzfasern. Es entsteht innerhalb der Lignocellulosefasern ein Glutnest, welches sich durch die dämmende Eigenschaft des Halbzeugs selbst nährt und bis an die Oberfläche durchdringt.

Bei der erfindungsgemäßen thermoplastischen Faser, insbesondere Monokomponentenfaser, wird nicht nur die Verfestigung durch Wasserdampfbildung bis 100°C, sondern darüber hinaus durch gezielte Strahlungsabsorption bis knapp oberhalb 130°C das vollständige Schmelzen ermöglicht.
Die schmelzende thermoplastische Faser wird zu einem Tropfen, welcher sich an den Kreuzungspunkten der angrenzenden lignocellulosen Fasern sammelt. Nach Rückgang der Temperatur unterhalb des Schmelzpunktes erstarrt diese Klebeverbindung.

Somit ist erstmalig die aushärtende Nachverformbarkeit eines gattungsgemäßen Formkörpers aus lignocellulosen und thermoplastischen Fasern bereits ohne Zugabe zusätzlicher Bindemittel möglich.

Der Grad dieser Verfestigung kann durch die bekannten Bindemittel noch erhöht werden, dann jedoch irreversibel.

Wird nur die erfindungsgemäße thermoplastische Faser eingesetzt, sind auch mehrfache Umformungen möglich.

Das vollständige Aufschmelzen bei 130°C, initiiert durch absorbierte hochfrequente Strahlung oder Mikrowellen, ermöglicht es, praktisch unabhängig von der Dicke der prepregs diese auf ein für das Umformen notwendiges Temperaturniveau zu bringen.

Beim Hersteller der thermoplastischen (Monokomponenten-)Faser kann das entsprechende Thermoplast-Granulat, jedoch auch die verwendete Avivage = Schlichte auf den Fasern, mit für hochfrequente Strahlung und Mikrowellen affinen Komponenten dotiert werden. Wahlweise ist auch die Nutzung eines hochpreisigen Thermoplasts wie eines copolymerisierten Polyamids möglich.

Durch moderate weitere Temperaturerhöhung auf oberhalb 130°C, allerdings immer unterhalb der Zersetzungstemperatur der lignocellulosen Fasern, ist auch die wärmedämmende Eigenschaft der prepregs für den folgenden Umformprozess nutzbar. Es bleibt nach der Erwärmung genügend Zeit, die temperierten prepregs aus der Gerätschaft der Erwärmung in eine Formpresse zu transportieren. Die Erwärmung muss somit nicht zwangsläufig kostentreibend in die Formpresse integriert sein. Diese kann auch kalt betrieben werden.
Es gibt jedoch auch Pressen, bei denen z.B. eine Hochfrequenzerwärmung integriert ist.

Die Möglichkeit, die Umformung auch kalt zu betreiben, d.h. ohne Heizeinrichtung in der Presse selbst, offenbart einen weiteren Vorteil der Erfindung. Damit kann die Anlagentechnik denkbar einfach gestaltet sein, so wie sie z.B. in einer üblichen Schreinerei zu finden ist. Die dreidimensionale Variabilität der möglichen Endformen ist praktisch unbegrenzt, solange kurz vorher das prepreg ganzheitlich auf eine Temperatur von knapp oberhalb 130°C gebracht wurde.
Besonders bevorzugt ist es, die Temperatur in einem hochfrequenten Wechselfeld ohne großen Mehraufwand und Zeitverlust auf z.B. 160 - 170°C zu bringen. Wie in Laborversuchen bestätigt, kann danach das prepreg ohne Handschuhe zu einer kalten Umformung transportiert werden. Es speichert die Wärme sehr lange, fühlt sich aber an der Oberfläche (durch die lignocellulosen Fasern) nicht sehr heiß an. Es steht ausreichend Zeit zur Verfügung, bis die thermoplastischen Monokomponentenfaser (dann geschmolzen zu einem Tropfen) wieder erstarrt.

Der Vorteil eines hochfrequenten Wechselfeldes gegenüber einer Erwärmung durch Mikrowellen besteht bei den hier verwendeten prepregs relativ konstanter Dicke darin, dass der Energieeintrag und dadurch die Erwärmung sehr gleichmäßig erfolgt, solange die Platten des Feldes knapp ober- und unterhalb des prepregs positioniert werden um Spannungsüberschläge zu vermeiden.
Mit der Mikrowellen- Technologie ist diese Gleichmäßigkeit des Energieeintrags prinzipiell auch möglich, erfordert aber derzeit einen wesentlich höheren apparativen Aufwand.

Wenn beide Eintragsformen für Energie nicht zur Verfügung stehen, dann kann ersatzweise auf Kontaktwärme oder Durchströmung mit Heißluft zurückgegriffen werden.

Aus Gründen der Vollständigkeit und Abgrenzung der Formkörperherstellung von der Herstellung der prepregs sei hier noch auf die Technologie zur prepreg- Herstellung verwiesen.
Die nach derzeitigem Stand effektivste Technologie zur Bereitstellung der prepregs nutzt kontinuierliche Anlagen, auf denen in ein loses, ungebundenes Vlies aus homogen im gewünschten Masseverhältnis gemischten Lignocellulose- und Thermoplastfasern Dampf mit ca. 100°C oder ein Dampf-Luft-Gemisch mit ca. 93°C eingebracht wird. Für die Herstellung von flexiblen Holzfaserdämmstoff-Matten hat sich diese Methode bewährt. Es werden möglichst preisgünstige Polyolefin-Fasern in Form von Bi-Komponentenfasem eingesetzt.

Üblich sind Rohdichten zwischen 40 kg/m³ und 270 kg/m³ für diese Dämmstoffe.

Nur die Vorprodukte, die prepregs bzw. Halbzeuge, tangieren diesen Bereich geringer Verdichtung. Ein Gegenstand der Erfindung sind jedoch dickwandige dreidimensionale Formkörper daraus, die eine höhere Rohdichte als lignocellulose Dämmstoffe aufweisen. Dickwandig meint Dicken von wenigstens 10mm, insbesondere wenigstens 15mm, bevorzugt wenigstens 20mm.

Prinzipiell ist in zwei verschiedene Kategorien der Endprodukte zu unterscheiden. Die erste Kategorie weist einen überwiegenden Anteil der lignocellulosen Fasern auf. Der Anteil der für den Energieeintrag durch Strahlung affinen thermoplastischen Monokomponentenfasern soll möglichst gering sein. Bevorzugt sind Anteile von 5 bis 18 % Monokomponentenfasern, bezogen auf die Masse der lignocellulosen Fasern.

Die daraus später durch Nachverdichtung angestrebten Rohdichten der dreidimensionalen Formteile liegen bevorzugt in einem Bereich von 300 - 750 kg/m³. Zweidimensionale Plattenwerkstoffe bekannter Gattung sind so genannte MDF (Mittel-Dichte Faserplatten) und leichte MDF, auch I-MDF oder LDF genannt. Sie weisen keine Verformung in der dritten Dimension auf.

Die zweite Kategorie Formkörper weist bezüglich der Verteilung der stofflichen Anteile an Grundstoffen ein gegenteiliges Bild auf. Es sind bevorzugt mehr thermoplastische Monokomponentenfasern enthalten als lignocellulose Fasern. Minimal ein mengenmäßiges Verhältnis von 50 % zu 50 %, bis zu drei- oder vierfach mehr Thermoplastfasern im Verhältnis zur lignocellulosen Faser.
Entsprechend werden die Eigenschaften des Composits deutlich in Richtung Plastwerkstoff verschoben.

Sinnvolle Einsatzmöglichkeiten werden dort gesehen, wo bisher zu 100 % aus Plastwerkstoff gefertigte Endprodukte eingesetzt werden, jedoch Limitierungen bei der Wanddicke und/oder dem Grad der gewünschten Formgebung erfahren.

Die Rohdichte dieser Endprodukte ist durch die Einlagerung lignocelluloser Fasern immer unterhalb der des reinen Plastwerkstoffes angesiedelt.

Es besteht auch die Möglichkeit, in die prepregs sehr effektiv weitere Komponenten einzubringen bzw. einzumischen. Dies kann homogen verteilt erfolgen, jedoch auch deutlich inhomogen, z.B. in Form so genannter "inserts" an Stellen späterer hoher Belastung.

Sehr effektiv ist es auch, im noch umformungsfähigen warmen Zustand oberflächenbildende Materialien, z.B. aus Leder oder Geweben dem Formpressvorgang beizulegen.

Der Vorformling (prepreg) kann in einem ersten Gerät durch ein hochfrequentes Wechselfeld oder Mikrowellenstrahlung gleichmäßig über die gesamte Dicke auf ein Temperaturniveau zwischen 130°C und 160°C gebracht werden und unmittelbar darauf in einem zweiten Gerät eine dreidimensionale Umformung erfahren und anschließend abgekühlt werden.

Nach der Erwärmung auf 130°C bis 160°C im ersten Gerät und vor der Umformung im zweiten Gerät können inserts unterschiedlicher Materialien eingebracht werden, die später im umgeformten Endprodukt als Last- und Krafteinleitungspunkte für Befestiger und externe Verbinder dienen.

Nach der Erwärmung auf 130°C bis 160°C im ersten Gerät und vor der Umformung im zweiten Gerät können dekorative oder funktionale Oberflächen bildende Materialien aufgelegt oder umgelegt werden, die später im umgeformten Endprodukt die sichtbare Oberfläche bilden.

Im ersten Gerät kann die Temperatur zur Erwärmung auf oberhalb 130°C durch Kontaktwärme oder Durchströmung mit Heißluft derart in den Vorformling (prepreg) eingebracht werden, dass sich diese Temperatur auch in der Mitte des Vorformlings (prepregs) vor der endgültigen Umformung im zweiten Gerät einstellt.

Bei dem ersten Gerät kann es sich um eine Heizvorrichtung handeln. Bei dem zweiten Gerät kann es sich um eine Umformpresse handeln.

Für Endrohdichten des Formkörpers von 300 - 750 kg/m³ kann ein Anteil von 7 - 20 % für hochfrequente Strahlung und Mikrowellen affiner thermoplastischer Monokomponentenfasern zu den lignocellulosen Fasern dem Vorformling (prepreg) zugemischt werden.

Für Endrohdichten des Formkörpers von 650 - 950 kg/m³ kann ein Anteil von 100 - 400% für hochfrequente Strahlung und Mikrowellen affiner thermoplastischer Monokomponentenfasern zu den lignocellulosen Fasern dem Vorformling (prepreg) zugemischt werden.

An besonders beanspruchten Stellen bzw. späteren Lastangriffspunkten der prepregs können inserts eingefügt wurden.

Die lignocellulosen Fasern können ein vor deren Vermischung mit den thermoplastischen Monokomponentenfasern aufgebrachtes duroplastisch härtendes Harz in einem Anteil von 3 - 18 %, bezogen auf die lignocellulosen Fasern, aufweisen.

Weitere Vorteile und Merkmale der Erfindung ergeben sich aus der nachfolgenden Figurenbeschreibung. Es zeigt:

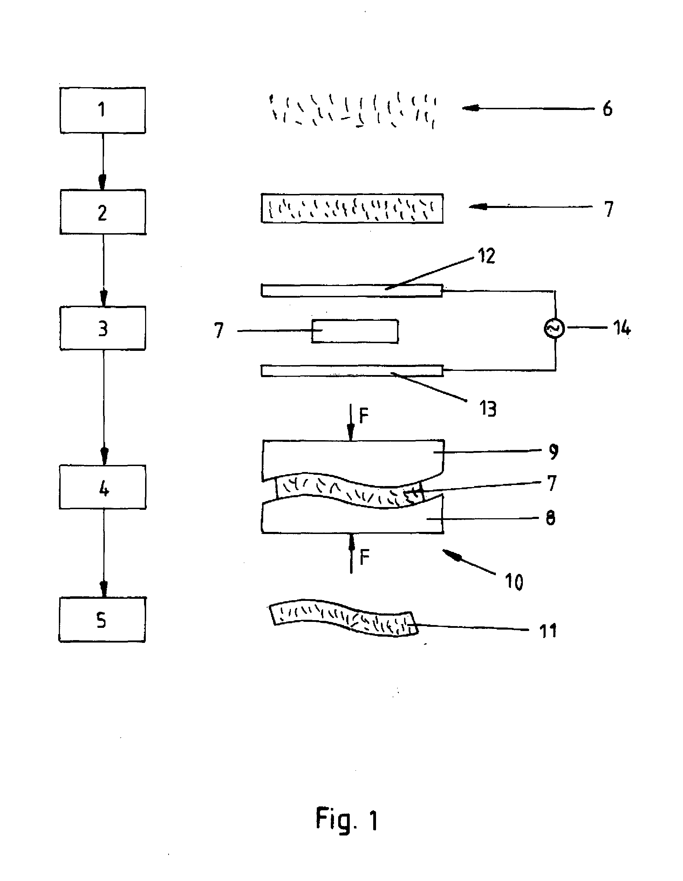

Fig. 1: schematisch eine Ausführungsform einer erfindungsgemäßen Verfahrensdurchführung.

Fig. 1 zeigt beispielhaft eine Ausführungsform einer erfindungsgemäßen Verfahrensdurchführung. Das Verfahren ist in fünf aufeinanderfolgende Schritte 1 bis 5 unterteilt.

In Verfahrensschritt 1 wird ein loses Gebinde 6 aus lignocellulosen Fasern einerseits und thermoplastischen Fasern andererseits bereitgestellt.

Dieses Gebinde 6 wird im Verfahrensschritt 2 erwärmt, beispielsweise durch Beaufschlagung mit Dampf mit einer Temperatur von ca. 100°C oder einem Dampf-Luft-Gemisch mit einer Temperatur von ca. 93°C. Die thermoplastischen Fasern erweichen bei dieser Temperatur bereits so weit, dass eine Verbindung mit den lignocellulosen Fasern erfolgen kann. Es wird also eine Verbindung zwischen den lignocellulosen Fasern und den thermoplastischen Fasern erreicht. Aus dem Gebinde 6 wird ein lagerfähiges Halbzeug 7 bzw. ein prepreg hergestellt.

Der darauffolgende Verfahrensschritt 3 kann räumlich und zeitlich vom Verfahrensschritt 2 entkoppelt sein. Im Verfahrensschritt 3 wird das Halbzeug 7 mit Hochfrequenz- bzw. Mikrowellenstrahlung beaufschlagt. Diese hat eine Frequenz zwischen 1 kHz und 300 GHz. Zur Bestrahlung dient eine Anordnung aus zwei Elektroden 12, 13. Die Elektroden 12, 13 sind an eine Wechselspannungsquelle 14 angeschlossen. Das Halbzeug 7 wird zwischen den beiden Elektroden 12, 13 angeordnet. Die Strahlung wird von den thermoplastischen Fasern absorbiert. Die Strahlungsenergie wird in Wärmeenergie gewandelt. Die für das vollständige Aufschmelzen der thermoplastischen Fasern notwendige Temperatur liegt ungefähr bei 130°C. Die thermoplastischen Fasern werden bevorzugt auf eine Temperatur zwischen 130°C und 160°C erwärmt. Die thermoplastischen Fasern schmelzen und speichern zusätzliche Wärme . Die lignocellulosen Fasern zersetzen sich bei diesen Temperaturen hingegen nicht. Gemäß einer Alternative kann bereits die Erwärmung des Gebindes 6 im Verfahrensschritt 2 durch eine derartige Bestrahlung erfolgen.

Auf den Verfahrensschritt 3 folgt der Verfahrensschritt 4. Dieser kann zeitlich und/oder räumlich vom Verfahrensschritt 3 entkoppelt sein. Zeitlich entkoppelt bedeutet, dass das Halbzeug 7 vor dem Umformen zwischengelagert wird. Dies erfordert, dass das Halbzeug 7 zuvor auf eine Temperatur von ca. 160°C bis 170°C erwärmt wird. Das Halbzeug 7 speichert die Wärme und kühlt nur langsam ab. Eine Weiterverarbeitung muss erst dann erfolgen, wenn die Temperatur des Halbzeugs 7 die Schmelztemperatur der thermoplastischen Fasern zu unterschreiten droht, d.h. ungefähr 130°C erreicht. Räumlich entkoppelt bedeutet, dass es sich bei der Vorrichtung zum Erwärmen des Halbzeugs 7 und der Vorrichtung zum anschließenden Verdichten/Umformen des Halbzeugs 7 um unterschiedliche Vorrichtungen handelt.

Das zuvor bestrahlte Halbzeug 7 wird in einer Presse 10 angeordnet. Diese weist eine Matrize 8 einerseits und einen Stempel 9 andererseits auf. Durch Beaufschlagen derselben mit einer Presskraft F wird das Halbzeug 7 zum einen umgeformt, zum anderen verdichtet. Das Umformen und/oder Verdichten des Halbzeugs 7 wird bestrahlungsfrei durchgeführt. Die Temperatur der thermoplastischen Fasern fällt und unterschreitet schließlich die Schmelztemperatur. Die lignocellulosen Fasern erstarren. Hierdurch kommt es zu einer Verfestigung des umgeformten und verdichteten Halbzeugs 7. Die Presse 10 wird geöffnet. Der auf entstandene Formkörper 11 kann entnommen werden. In Verfahrensschritt 5 ist somit ein verdichteter und dreidimensional umgeformter Formkörper 11 erreicht.

### Bezugszeichenliste

- 1: Verfahrensschritt
- 2: Verfahrensschritt
- 3: Verfahrensschritt
- 4: Verfahrensschritt
- 5: Verfahrensschritt
- 6: Gebinde
- 7: Halbzeug
- 8: Stempel
- 9: Matrize
- 10: Presse
- 11: Formkörper
- 12: Elektrode
- 13: Elektrode
- 14: Wechselspannungsquelle
- F: Presskraft

## Patentansprüche

1. Halbzeug zur Herstellung dreidimensionaler Formkörper, enthaltend lignocellulose Fasern und thermoplastische Fasern, **dadurch gekennzeichnet, dass** die thermoplastischen Fasern Strahlung mit einer Frequenz zwischen 1 kHz und 300 GHz absorbierend ausgebildet sind.

2. Halbzeug nach Anspruch 1, **dadurch gekennzeichnet, dass** die thermoplastischen Fasern eine Schmelztemperatur zwischen 90°C und 130°C aufweisen.

3. Halbzeug nach einem der vorangehenden Ansprüche, **dadurch gekennzeichnet, dass** die thermoplastischen Fasern an ihrer Oberfläche aus copolymerisiertem Polyamid gebildet sind.

4. Halbzeug nach einem der vorangehenden Ansprüche, **dadurch gekennzeichnet, dass** der Anteil an thermoplastischen Fasern 5 % bis 20 % beträgt, bezogen auf die Masse der lignocellulosen Fasern.

5. Halbzeug nach einem der Ansprüche 1 bis 3, **dadurch gekennzeichnet, dass** das Verhältnis zwischen thermoplastischen Fasern und lignocellulosen Fasern 1:1, 2:1, 3:1 oder 4:1 beträgt.

6. Halbzeug nach einem der vorangehenden Ansprüche, **gekennzeichnet durch** ein in die lignocellulosen Fasern und thermoplastischen Fasern eingebettetes Insert.

7. Halbzeug nach einem der vorangehenden Ansprüche, **dadurch gekennzeichnet, dass** die thermoplastischen Fasern als Monokomponentenfasern ausgebildet sind.

8. Halbzeug nach einem der vorangehenden Ansprüche, **dadurch gekennzeichnet, dass** die thermoplastischen Fasern mit einer zusätzlichen Komponente dotiert sind, welche Komponente Strahlung mit einer Frequenz zwischen 1 kHz und 300 GHz absorbierend ausgebildet ist.

9. Dreidimensionaler Formkörper, gebildet aus einem Halbzeug nach einem der Ansprüche 1 bis 8, **gekennzeichnet durch** eine Rohdichte von 300 bis 950 kg/m³.

10. Dreidimensionaler Formkörper nach Anspruch 9, **gekennzeichnet durch** eine Wandstärke von mindestens 10 mm.

11. Verfahren zur Herstellung eines dreidimensionalen Formkörpers aus einem Halbzeug enthaltend lignocellulose Fasern und thermoplastische Fasern, **dadurch gekennzeichnet, dass** das Halbzeug in einem ersten Schritt zum Zwecke der Erwärmung mit einer Frequenz zwischen 1 kHz und 300 GHz bestrahlt wird und diese Strahlung von den im Halbzeug enthaltenen thermoplastischen Fasern absorbiert wird, und dass das Halbzeug anschließend in einem zweiten Schritt dreidimensional umgeformt wird.

12. Verfahren nach Anspruch 11, **dadurch gekennzeichnet, dass** die beiden Schritte in räumlich voneinander getrennten Vorrichtungen durchgeführt werden.

13. Verfahren nach Anspruch 11 oder 12, **dadurch gekennzeichnet, dass** das Halbzeug im ersten Schritt auf eine Temperatur zwischen 130°C und 160°C erwärmt wird.

14. Verfahren nach einem der Ansprüche 11 bis 13, **dadurch gekennzeichnet, dass** vor dem Umformen ein Insert in das Halbzeug eingebracht wird.

## Claims

1. A semi-finished product for producing a three-dimensional molded body, comprising lignocellulose fibres and thermoplastic fibres, **characterized in that** the thermoplastic fibres are absorbing radiation having a frequency comprised between 1 kHz and 300 GHz.

2. A semi-finished product according to claim 1, **characterized in that** the thermoplastic fibres comprise a melting temperature comprised between 90°C and 130°C.

3. A semi-finished product according to one of the preceding claims, **characterized in that** the surface of the thermoplastic fibres is made of copolymerized polyamide.

4. A semi-finished product according to one of the preceding claims, **characterized in that** the percentage of thermoplastic fibres is comprised between 5 % and 20 % with regard to the mass of the lignocellulose fibres.

5. A semi-finished product according to one of the claims 1 through ..3, **characterized in that** the ratio between thermoplastic fibres and lignocellulose fibres is 1 : 1, 2 : 1, 3 : 1 or 4 : 1.

6. A semi-finished product according to one of the preceding claims, **characterized by** an insert embedded in the lignocellulose fibres and thermoplastic fibres.

7. A semi-finished product according to one of the preceding claims, **characterized in that** the thermoplastic fibres are mono-component fibres.

8. A semi-finished product according to one of the preceding claims, **characterized in that** the thermoplastic fibres are doped with an additional component, which component is absorbing radiation having a frequency comprised between 1 kHz and 300 GHz.

9. A three-dimensional molded body made of a semi-finished product according to one of the claims 1 through 8, **characterized by** a gross density comprised between 300 and 950 kg/m³.

10. A three-dimensional molded body according to claim 9, **characterized by** a wall thickness of at least 10 mm.

11. A method for producing a three-dimensional molded body from a semi-finished product containing lignocellulose fibres and thermoplastic fibres, **characterized in that** in a first step the semi-finished product is irradiated with a frequency comprised between 1 KHz and 300 GHz for the purpose of heating up the semi-finished product and this radiation is absorbed by the thermoplastic fibres contained in the semi-finished product and that in a second step the semi-finished product is then formed into a three-dimensional body.

12. A method according to claim 11, **characterized in that** the two steps will be carried out in devices that are separated from each other in space.

13. A method according to claim 11 or 12, **characterized in that** in a first step the semi-finished product is heated up to a temperature comprised between 130°C and 160°C.

14. A method according to one of the claims 11 through 13, **characterized in that** before the forming operation an insert is introduced into the semi-finished product.

## Revendications

1. Produit semi-fini destiné à la fabrication d'un corps moulé tridimensionnel, contenant des fibres lignocellulosiques et des fibres thermoplastiques, **caractérisé en ce que** les fibres thermoplastiques sont configurés pour absorber de la radiation ayant une fréquence comprise entre 1 kHz et 300 GHz.

2. Produit semi-fini selon la revendication 1, **caractérisé en ce que** les fibres thermoplastiques comprennent une température de fusion comprise entre 90°C et 130°C.

3. Produit semi-fini selon l'une des revendications précédentes, **caractérisé en ce que** les surfaces des fibres thermoplastiques sont formées d'un polyamide copolymérisé.

4. Produit semi-fini selon l'une des revendications précédentes, **caractérisé en ce que** le pourcentage des fibres thermoplastiques est compris entre 5 % et 20 % par rapport à la masse des fibres lignocellulosiques.

5. Produit semi-fini selon l'une des revendications 1 à 3, **caractérisé en ce que** le rapport entre des fibres thermoplastiques et des fibres lignocellulosiques est 1 : 1, 1 : 2, 1 : 3 ou 1 : 4.

6. Produit semi-fini selon l'une des revendications précédentes, **caractérisé par** un insert intégré dans les fibres lignocellulosiques et les fibres thermoplastiques.

7. Produit semi-fini selon l'une des revendications précédentes, **caractérisé en ce que** les fibres thermoplastiques sont configurés comme fibres à un composant.

8. Produit semi-fini selon l'une des revendications précédentes, **caractérisé en ce que** les fibres thermoplastiques sont dopés avec un composant supplémentaire, lequel composant est configuré pour absorber de la radiation ayant une fréquence comprise entre 1 kHz et 300 GHz.

9. Corps moulé tridimensionnel formé d'un produit semi-fini selon l'une des revendications 1 à 8, **caractérisé par** une densité apparente comprise entre 300 et 950 kg/m³.

10. Corps moulé tridimensionnel selon la revendication 9, **caractérisé par** une épaisseur de paroi d'au moins 10 mm.

11. Procédé de fabrication d'un corps moulé tridimensionnel à partir d'un produit semi-fini contenant des fibres lignocellulosiques et des fibres thermoplastiques, **caractérisé en ce que** dans une première étape le produit semi-fini est irradié par une fréquence comprise entre 1 kHz et 300 GHz pour chauffer le produit semi-fini et ce rayonnement est absorbé par des fibres thermoplastiques contenus dans le produit semi-fini et que dans une deuxième étape le produit semi-fini est ensuite formé dans un corps tridimensionnel.

12. Procédé selon la revendication 11, **caractérisé en ce que** les deux étapes se déroulent dans des dispositifs séparés l'un de l'autre dans l'espace.

13. Procédé selon la revendication 11 ou la revendication 12, **caractérisé en ce que** dans la première étape le produit semi-fini est chauffé à une température comprise entre 130°C et 160°C_{:}

14. Procédé selon l'une des revendications 11 à 13, **caractérisé en ce que** l'insert est introduit dans le produit semi-fini avant l'étape de formage.
